Europäisches Patentamt

European Patent Office

Office européen des brevets

(19)

(11) **EP 0 796 439 B1**

(12) **FASCICULE DE BREVET EUROPEEN**

(45) Date de publication et mention
de la délivrance du brevet:
**03.05.2000 Bulletin 2000/18**

(21) Numéro de dépôt: **95941771.8**

(22) Date de dépôt: **06.12.1995**

(51) Int Cl.⁷: **G01V 1/20**

(86) Numéro de dépôt international:
**PCT/FR95/01606**

(87) Numéro de publication internationale:
**WO 96/18116 (13.06.1996 Gazette 1996/27)**

(54) **PROCEDE DE RECEPTION AVEC LEVEE D'AMBIGUITE POUR UNE ANTENNE ACOUSTIQUE LINEAIRE REMORQUEE**

EMPFANGSVERFAHREN MIT MEHRDEUTIGKEITSENTFERNUNG FÜR AKUSTISCHE LINEARE SCHLEPPANTENNE

RECEPTION METHOD WITH AMBIGUITY REMOVAL FOR A TOWED LINEAR ACOUSTIC ANTENNA

(84) Etats contractants désignés:
**DE GB NL**

(30) Priorité: **06.12.1994 FR 9414646**

(43) Date de publication de la demande:
**24.09.1997 Bulletin 1997/39**

(73) Titulaire: **THOMSON-CSF**
**75008 Paris (FR)**

(72) Inventeurs:
• **METIVIER, Pierre**
**F-92402 Courbevoie Cédex (FR)**
• **DOISY, Yves**
**F-92402 Courbevoie Cédex (FR)**

(74) Mandataire: **Desperrier, Jean-Louis et al**
**Thomson-CSF Propriété Intellectuelle,**
**13, Avenue du Président Salvador Allende**
**94117 Arcueil Cédex (FR)**

(56) Documents cités:
**EP-A- 0 416 992        EP-A- 0 600 242**
**DE-A- 3 248 459        DE-A- 3 910 906**
**GB-A- 2 138 942**

## Description

La présente invention concerne les procédés de réception qui permettent de lever l'ambiguïté habituellement présente dans les signaux de détection élaborés à partir des signaux reçus par une antenne acoustique linéaire remorquée. Elle s'applique plus particulièrement à la localisation par un sonar actif à très basse fréquence.

On connait les antennes acoustiques linéaires remorquées formées d'un ensemble d'hydrophones disposés dans un tube flexible de grande longueur dont la flottabilité est ajustée pour être sensiblement neutre dans le milieu, la mer généralement, où il est immergé. Ces antennes acoustiques sont remorquées derrière un bateau tracteur en prenant le maximum de précautions pour qu'elles restent aussi rectilignes que possible. Les signaux reçus par les hydrophones sont aussi bien des bruits acoustiques provenant d'une source de bruit, telle que les hélices d'un bateau, que les échos provenant de la réflexion d'un signal acoustique émis par un émetteur acoustique fixé à la coque du bateau ou remorqué avec l'antenne. Dans le premier cas l'antenne fonctionne en mode passif et dans le deuxième cas en mode actif. Les dimensions, plusieurs centaines de mètres voire plusieurs kilomètres, que l'on peut donner à ces antennes permettent de fonctionner en très basse fréquence, et particulièrement en mode actif, ce qui permet une détection à longue distance.

Les signaux reçus par les hydrophones sont transformés par ceux-ci en signaux électriques qui sont ensuite traités dans des circuits électroniques adéquats. Il est connu de former avec ce traitement des voies de réception correspondant à des directions plus ou moins inclinées sur l'axe de l'antenne. Les hydrophones utilisés n'ayant généralement pas en eux-mêmes de directivité particulière, surtout en basse fréquence, ces voies ont en fait une symétrie de révolution autour de l'axe de l'antenne et forment donc des cônes de révolution centrés sur celle-ci. La source sonore pouvant provenir de n'importe quel point situé dans le cône, il y a donc à l'intérieur d'une voie une ambiguïté importante. Dans la pratique et compte tenu d'un certain nombre de dissymétries, en particulier de la surface de la mer sur laquelle se trouve la plupart des bateaux, cette ambiguïté se limite essentiellement à une ambiguté droite/gauche, qu'il est nécessaire de lever.

On connait dans l'art différents moyens pour résoudre ce problème :

On sait par exemple dans le cas d'un sonar actif utiliser une émission directive permettant d'insonifier de manière préférentielle chacun des deux demi-espaces situés à droite et à gauche de l'axe de l'antenne. Comme décrit en particulier dans la demande de brevet français n° 91 03853 déposée par la demanderesse le 29 mars 1991 et délivrée le 14 mai 1993 sous le n° 2 674 717, on utilise alors des codes orthogonaux se résumant le plus souvent à des fréquences différentes.

Dans ces conditions les signaux obtenus après traitement pour former une voie sont différents selon que l'objet à l'origine de l'écho est à droite ou à gauche. Toutefois il est difficile de réaliser une telle double émission directive dans les deux demi-espaces. Il faut pour cela utiliser, surtout en très basse fréquence, des antennes d'émission de grandes dimensions comportant de nombreux transducteurs, dont la complication contraste avec la simplicité de l'antenne d'émission omnidirectionnelle généralement utilisée. En outre pour séparer les deux émissions il faut qu'elles correspondent à deux bandes de fréquence disjointes et comme la bande de fréquence totale disponible n'est pas très grande et est déjà totalement utilisée dans les systèmes habituels, on est conduit en fait à émettre de chaque côté dans la moitié de la bande possible, ce qui réduit d'autant le gain de traitement.

Une autre technique consiste à réaliser une antenne ou un système d'antenne qui présente une directivité droite/gauche intrinsèque. Pour cela on est conduit à utiliser des associations d'hydrophones qui peuvent être soit répartis dans des antennes linéaires distinctes remorquées parallèlement, selon la technique dite du rateau, soit combinés à l'intérieur d'une même antenne linéaire de dimensions transversales plus importantes, par exemple selon une technique décrite dans la demande de brevet français n° 89 11749 déposée par la demanderesse le 8 septembre 1989 et délivrée le 17 avril 1992 sous le n° 2 651 950. Dans le cas des antennes linéaires multiples il est difficile de maintenir ou de connaître les positions relatives entre celles-ci. On est alors amené soit à utiliser des systèmes mécaniques compliqués pour les maintenir bien parallèles, ou des systèmes compliqués de télémétrie en temps réel pour déterminer les positions relatives et appliquer les corrections correspondant aux variations de celles-ci. Dans le cas des capteurs à directivité intrinsèque ceux-ci sont difficilement réalisables et présentent en outre des performances de sensibilités plus faibles et sont plus encombrants qu'un hydrophone classique tout en étant beaucoup plus chers. De tels hydrophones sont en particulier décrits dans la demande de brevet français n° 88 16803 déposée le 20 décembre 1988 par la demanderesse et délivrée le 26 juillet 1991 sous le n° 2 640 842 ainsi que dans la demande de brevet n° 91 16162 déposée par la demanderesse le 26 décembre 1991 et délivrée le 25 février 1994 sous le n° 2 185 848.

On connait aussi de la demande de brevet allemande 3 910 906 un système où l'on compense la courbure naturelle d'une antenne linéaire, ce qui permet dans une certaine mesure de lever l'ambiguïté. Toutefois cette courbure naturelle n'est pas assez forte pour obtenir des résultats satisfaisants.

Pour pallier ces inconvénients, l'invention propose un procédé selon les revendications annexées.

D'autres particularités et avantages de l'invention apparaîtront clairement dans la description suivante présentée à titre d'exemple non limitatif en regard des figures annexées qui représentent :

- la figure 1, la forme d'une trajectoire imposée à l'antenne selon l'invention ;
- la figure 2, l'écart entre la forme réelle de l'antenne et la trajectoire de la tête de celle-ci ;
- les figures 3 et 4, deux représentations schématiques d'une antenne linéaire tractée par un bateau ;
- la figure 5, une vue de côté d'un poisson servant à remorquer une antenne selon l'invention ;
- la figure 6, le schéma synoptique d'un système de restitution de la géométrie de l'antenne ;
- la figure 7, le diagramme d'une voie de réception montant le lobe principal et le lobe secondaire ;
- la figure 8, un schéma synoptique de la formation des voies et de la détection des échos dans ces voies ; et
- la figure 9, un schéma synoptique d'une variante de réalisation de l'invention.

On sait que pour former une voie de réception dans une antenne on apporte des retards aux différents signaux reçus par les capteurs de cette antenne avant de faire la sommation de ces signaux. Ces retards sont fonction de l'emplacement des capteurs les uns par rapport aux autres et de la direction de la voie à obtenir. Ils ne déterminent donc en général qu'une seule direction.

Dans le cas d'une antenne linéaire, plus particulièrement acoustique, c'est la symétrie apportée par l'alignement des capteurs sur l'axe de l'antenne qui amène à obtenir une voie de réception en forme de cône.

Lorsque la symétrie est rompue, par exemple par suite d'une courbure accidentelle de l'antenne, le gain de traitement à l'intérieur du cône diminue rapidement dans la plupart des directions pour ne plus laisser subsister qu'une direction privilégiée formant une voie unique de réception, avec des lobes secondaires plus ou moins atténués répartis approximativement dans le cône initial. Comme on ne sait pas où est pointée cette voie, et qu'en particulier elle peut très bien être dirigée vers la surface ou vers le fond, ce qui est généralement sans intérêt, on s'efforce par tous les moyens de garder la rectitude de l'antenne de la manière la plus parfaite possible.

L'invention prend le contrepied de ces habitudes en proposant de donner à l'antenne linéaire une forme courbée et connue dans le plan horizontal par exemple, de telle manière que le traitement des signaux des hydrophones permette de former des voies à droite et à gauche distinctes et ne présentant plus d'ambiguïté droite/gauche. Pour cela un premier traitement forme une voie gauche et un deuxième traitement une voie droite. En fait chacun de ces traitements entraîne aussi bien la formation d'un lobe principal d'un côté correspondant à la voie formée que celle d'un lobe secondaire de l'autre côté correspondant à l'ambiguïté initiale, mais le niveau du lobe secondaire est suffisamment faible pour qu'on puisse lever l'ambiguïté par comparaison du niveau de réception des deux côtés.

L'invention propose en outre de donner à la tête de l'antenne un mouvement oscillatoire de faible amplitude dans le plan horizontal, de telle manière que la forme de l'antenne soit connue à chaque instant à partir du mouvement de cette tête, ce qui permet d'adapter en permanence le traitement des signaux des hydrophones pour former les voies souhaitées.

En effet les antennes linéaires classiques dont le diamètre est faible devant leur longueur et qui sont correctement équilibrées, c'est-à-dire dont la densité en tout point est très voisine de celle de l'eau, présentent la particularité que, lorsque le débattement de l'antenne est faible, ceci correspondant à une incidence en tous points de l'antenne faible (le vecteur vitesse de chaque point de l'antenne reste sensiblement parallèle à l'axe moyen longitudinal de l'antenne en ce point), la trajectoire de l'antenne est telle que chaque point sucessif le long de celle-ci au fur et à mesure de l'avancement suit très sensiblement la trajectoire de la tête. Ainsi l'antenne se comporte à peu près comme un train qui suit des rails non rectilignes, ou comme un ver de terre qui avance dans le trou qu'il creuse en progressant.

Pour obtenir donc une forme d'antenne donnée il suffit alors que la tête suive la trajectoire voulue, la forme de l'antenne à chaque instant se confondant ensuite très sensiblement avec cette trajectoire.

On peut bien entendu imaginer toutes sortes de trajectoires répondant à ces conditions, mais comme l'essentiel est que la forme de l'antenne ne soit pas rectiligne, les trajectoires les plus simples à obtenir seront aussi bonnes que les autres et donc a priori les meilleures puisqu'elles permettront à la fois d'utiliser des moyens simples pour les obtenir et des moyens simples pour effectuer les calculs de formation de voies.

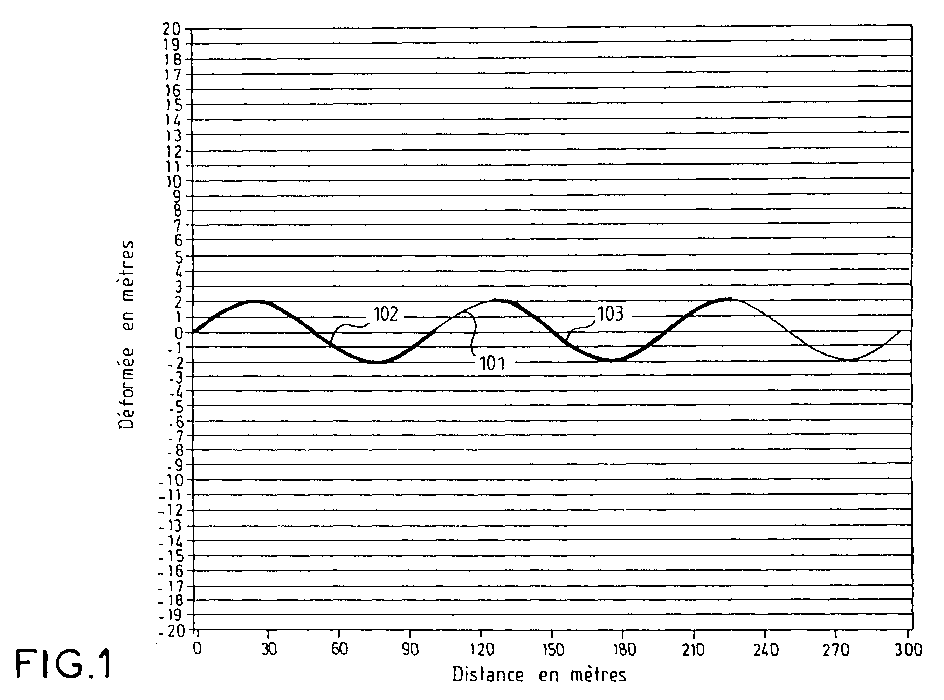

Parmi les différentes formes simples, l'invention propose de sélectionner plus particulièrement une trajectoire sinusoïdale telle que celle de la figure 1 qui représente avec des échelles différentes pour la distance qui est en abscisse et la déformée qui est en ordonnée, une trajectoire sensiblement sinusoïdale 101. L'antenne qui suit cette trajectoire est représentée à deux instants différents qui correspondent à deux formes différentes 102 et 103.

A titre d'exemple, pour une antenne linéaire d'une longueur de 100 m remorquée à une vitesse de 10 nds, soit 5 m par seconde, à l'aide d'un corps hydrodynamique situé à la tête de cette antenne et dont le mouvement est contrôlé par des gouvernes pour obtenir une trajectoire dont le plan horizontal représentant une sinusoïde de période 100 m également et d'amplitude 2 m, la période temporelle du mouvement sera de 20 secondes et l'angle maximum entre l'axe de l'antenne et sa trajectoire rectiligne moyenne sera de l'ordre de 4°. On constate ainsi que l'incidence reste partout très faible et que donc la trajectoire du corps hydrodynamique situé en tête de l'antenne et la forme de l'antenne restent très voisine.

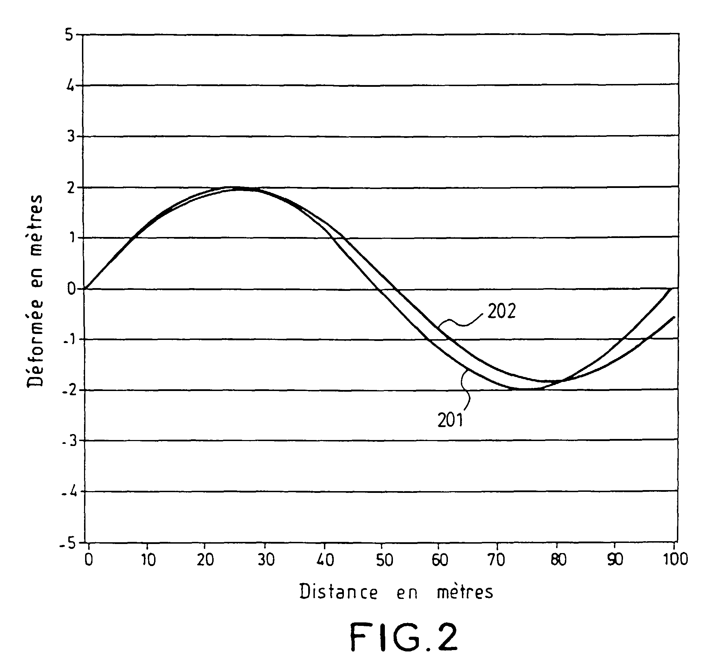

On connaît en outre des modèles hydrodynamiques extrêmement précis d'un corps très allongé comme une telle antenne, qui permettent de calculer avec une précision de quelques centimètres la forme de ce corps en fonction de la trajectoire suivie par la tête dans les conditions de courbure faible définies ci-dessus. Le résultat des calculs de modélisation appliqué à l'antenne correspondant aux valeurs numériques ci-dessus est représenté sur la figure 2 par la courbe 202 qui représente donc la forme réelle de l'antenne par rapport à la trajectoire de la tête de celle-ci représentée par la courbe 201. On constate que l'écart, qui par ailleurs est parfaitement prédictible et stable, est extrêmement minime entre ces deux courbes.

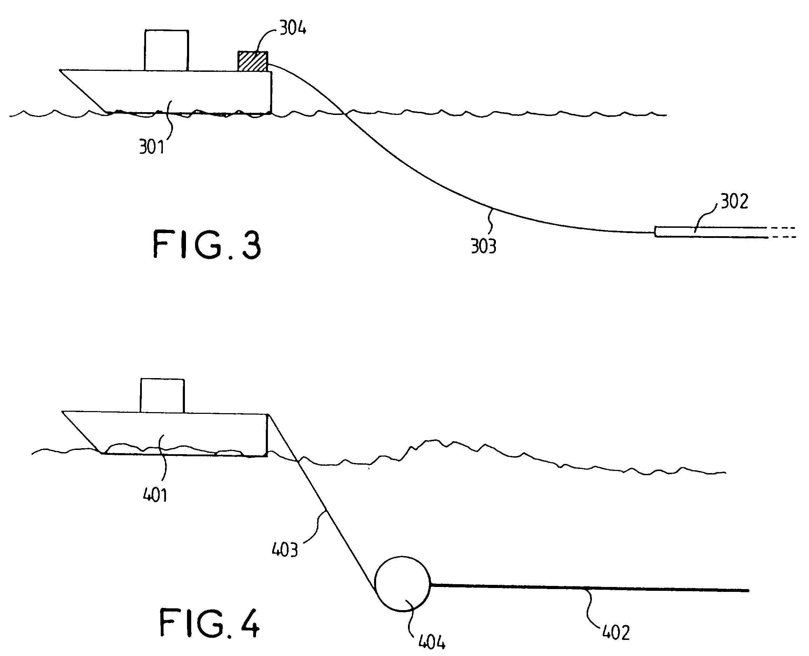

Pour mettre en oeuvre l'invention le système le plus simple est représenté sur la figure 3. Sur cette figure un bateau 301 naviguant en surface remorque à une profondeur d'immersion relativement faible et constante une antenne acoustique linéaire 302 qui est tractée depuis le bateau à l'aide d'un câble de remorquage 303. Ce câble de remorquage est accroché au bateau à l'aide d'un dispositif 304 qui permet de faire varier le point d'ancrage sur le bateau de part et d'autre de l'axe de celui-ci selon un mouvement périodique et symétrique. Ce dispositif peut être composé par exemple d'un bras fixé sur un axe vertical et à l'extrémité duquel est accroché le câble 303. Ce bras est entraîné par des moyens tels qu'une came par exemple, qui permettent de faire décrire à l'extrémité du bras auquel est accroché le câble le mouvement alternatif en question. Le profil de la came sera alors ajusté pour que la tête du bras décrive un mouvement qui, compte tenu de l'avance du bateau, correspond à la déformée souhaitée du câble, une sinusoïde par exemple. Le câble suit alors ce mouvement et le transmet à la tête de l'antenne remorquée 302, dont le corps suit lui aussi le mouvement.

Ce dispositif est simple mais il présente l'inconvénient que la relation entre le mouvement de l'extrémité du bras et celui de la tête de l'antenne est moins rigoureuse que dans le cas où l'on excite directement le mouvement de la tête de cette antenne de la manière qui sera décrite plus loin. En outre le mouvement de la tête du bras est perturbé par les mouvements du bateau, dus en particulier aux vagues. On peut bien entendu compenser ce mouvement par des moyens de correction mécaniques appropriés, mais ceci se fait au détriment de la simplicité du système. Cependant lorsque ces mouvements sont compensés, ou bien lorsque la mer est suffisamment calme, la relation entre le mouvement de la tête du bras et celle de la tête de l'antenne est suffisamment constante pour que l'on puisse, au besoin par un étalonnage préalable, considérer que le mouvement de l'antenne est stable et bien connu.

On remarque en particulier que ce mode de réalisation est spécialement adapté au cas d'une antenne linéaire acoustique fonctionnant de manière passive et ne nécessitant pas alors l'emploi d'un émetteur acoustique immergé comme dans le mode de réalisation préféré qui va maintenant être décrit, car il n'est plus alors nécessaire d'utiliser un corps destiné à recevoir l'antenne d'émission.

Ce mode de réalisation préféré est représenté schématiquement sur la figure 4 : un bateau 401 remorque une antenne linéaire acoustique 402 par l'intermédiaire d'un câble de remorquage 403 et la liaison entre l'antenne et le câble se fait à l'aide d'un corps remorqué 404, représenté schématiquement ici sous la forme d'une boule. De manière connue ce corps remorqué présente à la fois une masse et une trainée hydrodynamique importantes, ce qui permet de stabiliser le mouvement de l'antenne en dépit des à-coups provenant du remorquage. En outre, et aussi de manière connue, le profilage de ce corps est étudié pour qu'il présente une déportance permettant de maintenir l'antenne à une profondeur stable et déterminée sous la surface de l'eau. Compte tenu des dimensions et de la masse de ce corps, également appelé "poisson", on place généralement dans l'intérieur de celui-ci les moyens d'émissions acoustiques nécessaires lorsque l'on veut utiliser l'antenne linéaire dans un mode actif.

L'invention propose alors d'utiliser également ce poisson pour appliquer à la tête de l'antenne le mouvement nécessaire destiné à avoir la déformée permettant d'obtenir le levée d'ambiguïté. L'un des moyens pour obtenir cet effet consiste à munir le poisson de gouvernes hydrodynamiques qui sont actionnées de telle manière à faire parcourir au poisson un mouvement ondulatoire dans le plan horizontal, lequel est transmis à l'antenne.

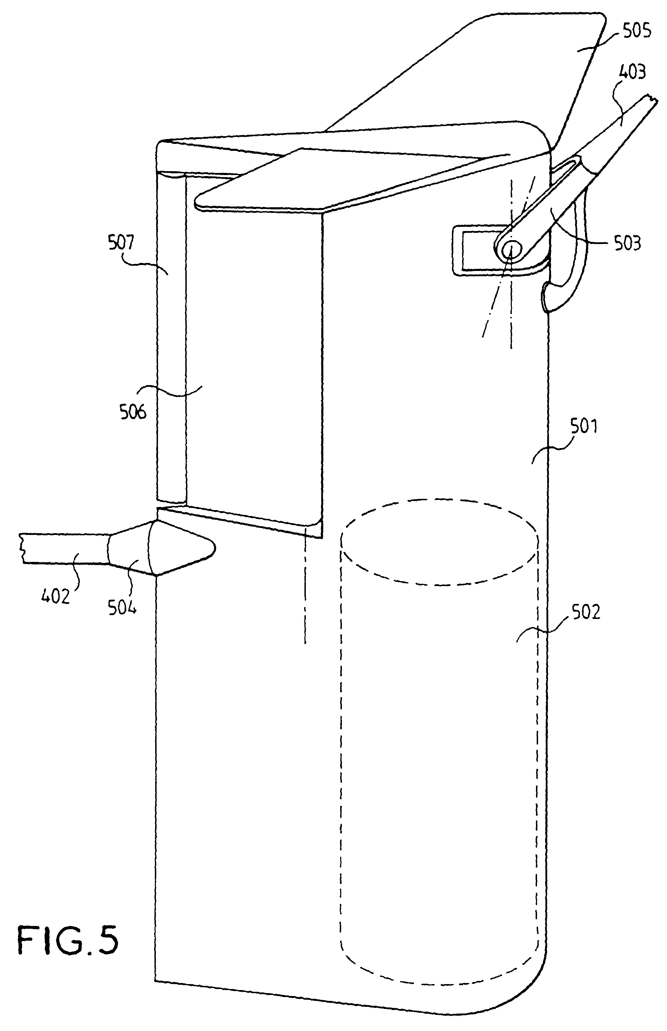

On a représenté sur la figure 5 une vue de côté d'un mode de réalisation particulier d'un tel poisson. Celui-ci comprend un corps profilé 501 ayant la forme d'une aile d'avion symétrique verticale qui sert de structure porteuse aux autres éléments du poisson et qui comporte à son intérieur une antenne d'émission très basse fréquence omnidirectionnelle ayant la forme d'un cylindre 502 de section elliptique pour remplir au mieux l'espace libre à l'intérieur du corps 501.

Des moyens d'accrochage 503 permettent de fixer le câble de remorquage 403 au corps du poisson d'une manière articulée avec deux axes de liberté. L'un de ces axes permet au point d'ancrage du câble de s'incliner vers la surface en laissant le poisson libre de naviguer horizontalement, et l'autre axe permet au poisson, sous l'action des gouvernes décrites plus loin, de s'orienter autour de la verticale de manière à amorcer le mouvement ondulatoire nécessaire à l'invention.

Des moyens d'ancrage 504 situés à l'arrière du corps 501 permettent de fixer l'antenne 402 à celui-ci pour la remorquer. Ces moyens d'ancrage permettent le passage des connexions électriques de l'antenne qui traversent le corps et viennent se raccorder au câble de remorquage 403 par l'intermédiaire des moyens de fixation 503.

L'extrémité supérieure du corps 501 est coiffée d'un dièdre de stabilisation 505 en forme d'aile inversée. Il permet à la fois de maintenir le corps dans sa position verticale et d'exercer une forme de déportance qui tend à enfoncer l'ensemble du poisson vers le fond de l'eau. Cette action de dépresseur permet de maintenir l'antenne 402 avec l'immersion souhaitée.

Selon l'invention, le poisson comporte en outre une gouverne verticale formée d'un safran 506 complété par un volet de bord de fuite 507. Cette gouverne est actionnée par un moteur situé dans le corps 501 et obéissant à des signaux de commande provenant du bateau tracteur par le câble de remorquage 403. Sous l'action de ces signaux le moteur fait tourner le safran 506, soit directement soit indirectement par l'intermédiaire du volet 507, de manière à faire partir le poisson vers la gauche et vers la droite de la trajectoire suivie par le bateau. Les signaux appliqués permettent d'obtenir ainsi un mouvement ondulatoire, de préférence sinusoïdal, du poisson dans le plan horizontal. Comme on l'a vu plus haut, ce mouvement est communiqué à la tête de l'antenne et le reste du corps de l'antenne suit le mouvement pour obtenir l'effet souhaité dans l'invention.

Ce mode de réalisation ainsi décrit n'est qu'un exemple particulier et on peut en concevoir bien d'autres. On pourrait en particulier concevoir un corps dont la forme hydrodynamique entraîne une instabilité dans le sens horizontal se traduisant par une oscillation donnant naturellement un mouvement sinusoïdal.

En effet, il est nécessaire pour former les voies avec une précision suffisante de reconstituer la forme de l'antenne avec une précision de l'ordre du 1/10ème de la longueur d'onde acoustique. Ceci nécessite de mesurer le déplacement de la tête de l'antenne, donc celui du poisson, de manière directe et il importe peu alors que le poisson obéisse avec une grande précision aux commandes des gouvernes ou qu'il présente un mouvement ondulatoire intrinsèque.

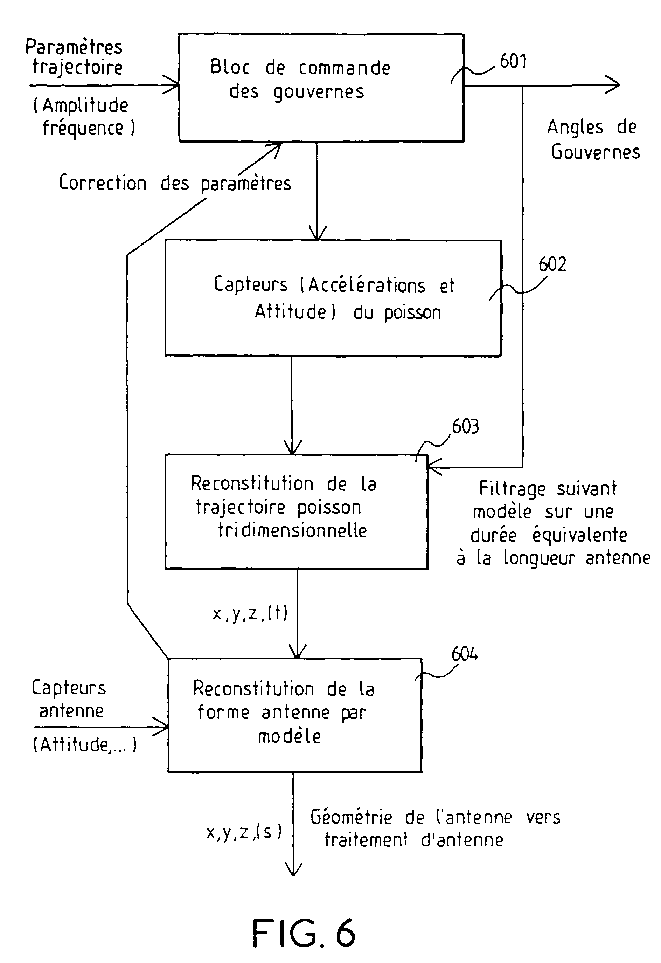

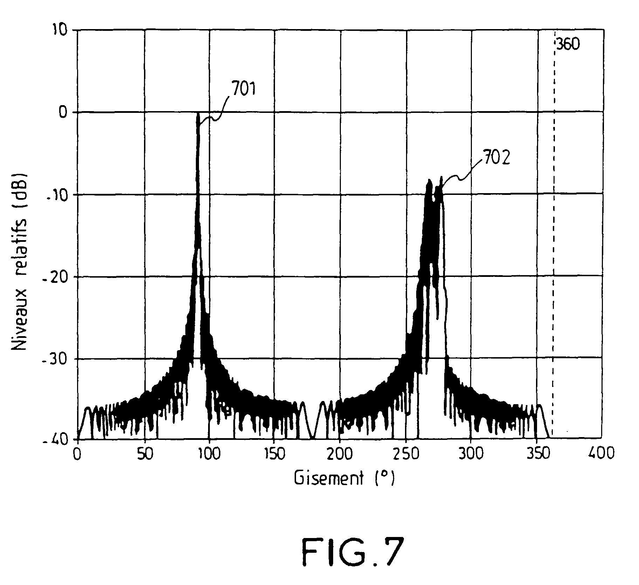

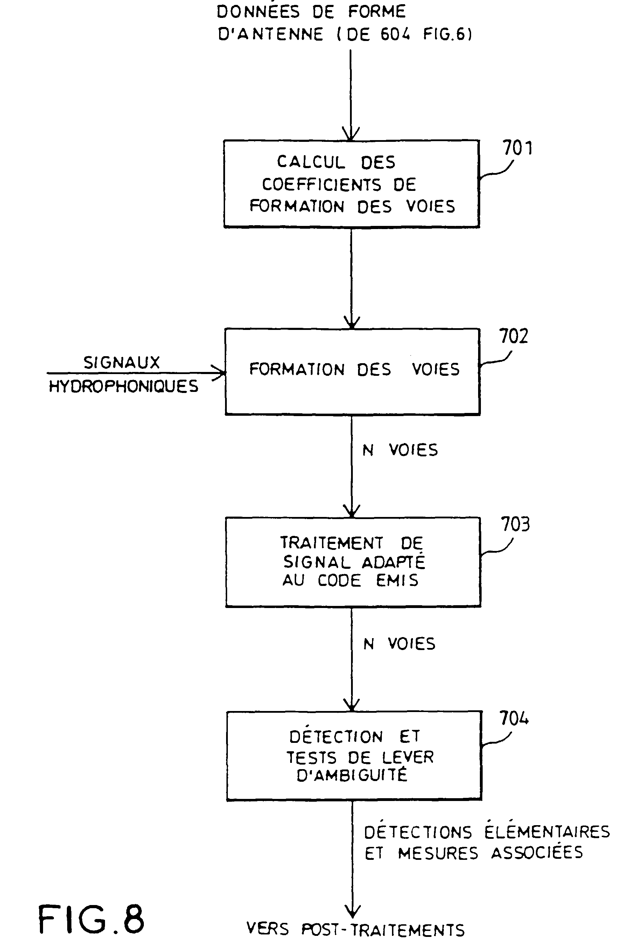

On a représenté à titre d'exemple sur la figure 6 le schéma synoptique d'un système de contrôle et de mesure de la trajectoire de l'antenne.

Les paramètres de la trajectoire, c'est-à-dire essentiellement l'amplitude et la fréquence dans le cas d'un mouvement sinusoïdal, sont appliqués à un bloc de commande des gouvernes 601 qui délivre des signaux permettant d'orienter les gouvernes 506/507 avec des angles correspondant aux mouvements à obtenir, compte tenu des paramètres connus du poisson. Comme on l'a expliqué plus haut ce pilotage se fait en boucle ouverte, puisqu'il serait illusoire de vouloir mettre en place un asservissement stricto sensu.

Le poisson comprend également un ensemble de senseurs, rassemblés sur la figure 6 dans le bloc 602, dont les indications permettent de reconstituer la trajectoire du poisson. Ces senseurs peuvent être de natures diverses, et la réalisation la plus simple, compte tenu de la précision à obtenir, consiste par exemple en une combinaison triaxiale d'accéléromètre, de préférence à très faible fréquence propre, pour reconstituer cette trajectoire par double intégration, d'une manière semblable à celle utilisée dans les plates-formes inertielles. Compte tenu des ordres de grandeur courants, dont on a cité un exemple plus haut, la précision requise pour ces accéléromètres afin d'obtenir la précision nécessaire sur la trajectoire est de l'ordre du milli-g, ce qui est tout à fait accessible avec des accéléromètres courants. On pourra compléter les indications de ces accéléromètres par des senseurs d'attitude permettant d'effectuer une correction du second ordre sur les calculs permettant de restituer la trajectoire à partir des signaux provenant des accéléromètres. Ces signaux sont appliqués à un bloc de calcul 603 qui permet de reconstituer la trajectoire du poisson à partir des fonctions de transfert établies par étalonnage préalable entre les mouvements de la plate-forme et les signaux délivrés par les capteurs. On calculera cette trajectoire, en utilisant un filtrage de préférence numérique, sur une durée équivalente au temps de passage de l'antenne linéaire. Ce temps de passage est donné par $\frac{L}{v}$ où L est la longueur de la flute et v la vitesse du bateau-tracteur. La précision obtenue sur la trajectoire donne une précision relative sur les positions pendant cette durée et non une précision à long terme, ce qui est normal lorsque l'on utilise comme capteur des accéléromètres. Mais de toutes façons la précision à long terme est essentiellement donnée par le fait que, le poisson étant remorqué, sa trajectoire moyenne est essentiellement celle du bateau-tracteur puisque comme il est relié à celui-ci par un câble il ne peut pas y avoir de dérive qui l'éloigne de manière durable du bateau.

A partir de la trajectoire du poisson déterminée dans le bloc 603, on reconstitue la forme de l'antenne à chaque instant dans un bloc 604. Pour cela on utilise les méthodes de calcul reliant la trajectoire de la tête de l'antenne à la trajectoire de chaque partie de celle-ci, plus particulièrement les parties comportant les hydrophones. Ces méthodes de calculs, qui ont été citées plus haut, sont bien connues dans l'art et elles permettent d'obtenir une précision meilleure que quelques centimètres sur toute la longueur de l'antenne, les perturbations principales étant prises en compte par la trajectoire mesurée du poisson. On reconstitue la forme tridimensionnelle, bien que l'invention ne nécessite qu'une courbure dans le plan horizontal, parce qu'il est inévitable, en particulier compte tenu des à-coups provenant du bateau-tracteur, que le poisson ait un léger mouvement parasite dans le sens vertical, qui se communique à l'antenne. Ce mouvement parasite se répercute sur la forme de l'antenne et donc sur la précision des voies de détection. Comme on sait en tenir compte pour former ces voies de manière à obtenir les directions souhaitées, et que cette prise en compte du mouvement vertical ne consomme pratiquement pas de matériel mais simplement un peu de temps calcul, il est préférable effectivement de le prendre en compte.

On peut en outre utiliser dans le bloc 604 les signaux provenant des senseurs d'attitude de l'antenne lorsque celle-ci en est pourvue. Généralement ces senseurs permettent de déterminer le cap et l'immersion de l'antenne et leur utilisation permettra de calibrer les paramètres du modèle permettant de reconstituer la forme de l'antenne à partir de la trajectoire du poisson, et éventuellement de corriger ces paramètres en temps réel. On obtient donc en sortie de ce bloc 604, avec la récurrence nécessaire à la formation numérique des voies de réception de l'antenne, un tableau déterminant les positions relatives dans l'espace des différents hydrophones de cette antenne.

Le cas échéant on peut également utiliser dans le bloc 603 les valeurs des angles des gouvernes délivrées par le bloc 601 pour affiner la reconstitution de la trajectoire du poisson. On peut aussi renvoyer en rétroaction vers le bloc de commande de gouvernes 601 les résultats de la reconstitution de la forme de l'antenne obtenus dans le bloc 604 afin de corriger les paramètres de trajectoire pour corriger des éventuelles variations lentes dans le temps de la fonction de transfert global du système, qui se traduiraient par exemple par une dérive à gauche ou à droite de l'ensemble poisson-antenne correspondant à un braquage moyen non nul des gouvernes de commande du poisson.

Comme on l'a exposé plus haut, lorsque l'antenne linéaire présente une géométrie suffisamment courbe, la fonction de directivité des voies que l'on peut former en tenant compte de façon exacte de cette géométrie ne présente plus une symétrie de révolution autour de l'axe de l'antenne, et cette fonction de directivité possède donc un lobe principal dont le maximum est unique dans la direction pour laquelle la voie est formée et des lobes secondaires en nombre et en directions variables dont les niveaux sont inférieurs à celui du lobe principal. Lorsque l'on reçoit un écho provenant d'une source acoustiquement réfléchissante, celui-ci est reçu sur les différents lobes et l'expérience montre qu'avec un écart de quelques dB entre le niveau de cet écho dans le lobe principal et les niveaux de ce même écho dans les lobes secondaires des autres voies, on peut déterminer avec une probabilité d'erreur suffisamment faible que cet écho est bien situé dans le lobe principal de la voie en question. Ces tests de discrimination sont connus dans la technique des sonars et partent d'une hypothèse implicite selon laquelle l'écho est unique, tout au moins dans les secteurs où il risque d'y avoir une ambiguïté pour une distance donnée.

A titre d'exemple on a représenté sur la figure 7 la coupe pour un site nul de la fonction de directivité d'une antenne déformée présentant une forme pseudo-sinusoïdale de longueur d'onde 75 m avec une amplitude de 0,75 m. L'antenne elle-même mesure 75 m et l'échantillonnage des signaux des hydrophones correspond à une longueur d'onde acoustique de 1,50 m. On constate sur ce diagramme que l'écart de niveau entre le lobe principal 701 et le lobe secondaire de niveau le plus élevé 702 est bien supérieur à 9 dB et permet donc la discrimination entre les deux directions correspondant à ces lobes sur une seule récurrence.

On a représenté sur la figure 8 un schéma synoptique du traitement des signaux provenant des hydrophones d'une antenne déformée selon l'invention.

Les données de forme de l'antenne, provenant par exemple du bloc 604 de la figure 6, sont appliquées à un bloc 701. Ces données correspondent en fait aux positions relatives des hydrophones dans l'espace à l'instant t d'échantillonnage des signaux provenant des hydrophones. Le bloc permet donc de calculer à partir de ces positions les retards temporels ou de phase à appliquer aux signaux des hydrophones pour former les voies dans les directions souhaitées. Ce calcul est effectué de manière répétitive selon la récurrence des échantillons provenant des hydrophones et en tenant compte de la position des hydrophones à chacun de ces instants. Le calcul permet également d'obtenir les coefficient de pondération d'amplitude des signaux des hydrophones qui permettent, selon une technique connue, de diminuer le niveau des lobes secondaires.

Les signaux provenant des hydrophones sont alors retardés, et éventuellement pondérés, dans un bloc de formation de voies 702 pour obtenir ainsi un ensemble de n voies de réception.

Les signaux correspondant à ces n voies sont ensuite traités selon un code adapté au code d'émission dans un bloc 703, selon une technique connue. En sortie de ce bloc on dispose pour chaque voie du niveau d'énergie reçu dans chaque case-distance, après éventuellement une intégration.

Finalement un dernier traitement, lui aussi classique, est effectué dans le bloc 704 qui, après normalisation et détection, permet de conserver pour chaque case distance les n plus fortes détections et ensuite d'effectuer un test permettant de déterminer, en fonction du niveau de l'écho et du rapport signal à bruit estimé dans chaque voie, quelle est la voie la plus probable où se situe la source de l'écho.

On peut ensuite effectuer sur ces détections élémentaires et leurs mesures associées des calculs de mesures fines en gisement et en distance par toutes méthodes connues, par exemple par interpolation.

Dans une variante de l'invention, on contraint l'amplitude de la déformation en agissant sur les commandes des gouvernes, éventuellement à l'aide d'un asservissement, de sorte :

- qu'elle soit suffisamment faible pour occasionner une perte négligeable de détection si elle n'est pas compensée lors de la formation des voies ;
- qu'elle soit néanmoins suffisante pour permettre de lever l'ambiguïté droite/gauche sur les échos lorsqu'elle est prise en compte dans la formation des voies.

En effet les voies droite et gauche obtenues en compensant la déformation présentent en sortie des bruits fortement corrélés si bien qu'une faible valeur de réjection suffit à lever l'ambiguïté avec une probabilité suffisante. L'amplitude de la déformée correspondante est alors faible (typiquement $\frac{\lambda}{10}$ à $\frac{\lambda}{20}$) et les pertes en signal des voies formées en négligeant la déformation sont alors inférieures à 1dB.

On effectue alors un traitement en deux étapes qui permet de lever l'ambiguïté sans connaître tous les paramètres (en particulier l'amplitude) de la déformation.

La première étape consiste en une formation de voies ambiguës, sans prise en compte de la déformée, suivie du filtrage adapté au code émis (ou de tout autre traitement temporel), puis des étapes de normalisation, détection, mesures.

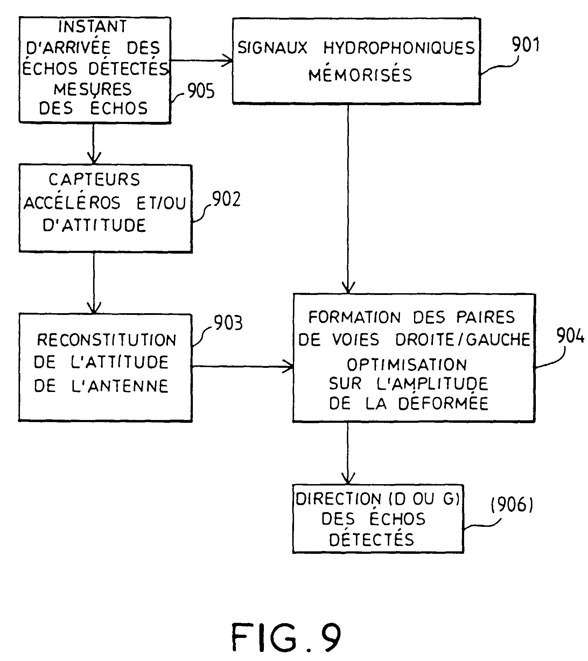

La seconde étape, schématisée sur la figure 9, nécessite une mémorisation (901) préalable des signaux hydrophoniques de la récurrence en cours, ainsi que des capteurs (902) accélérométriques et/ou d'attitude. Pour chacun des échos détectés, on forme un nombre restreint de paires de voies droite et gauche (904) dans le voisinage du gisement moyen de l'écho mesuré au moment (905) de la réception ambiguë. Ces paires de voies prennent en compte l'attitude de chaque capteur de l'antenne, reconstituée (903) à partir des senseurs d'accélération et/ou d'attitude du poisson et/ou de l'antenne. L'amplitude de la déformation est un paramètre qui est optimisé en fonction de la sortie des paires de voies formées, sur le critère du maximum de niveau de l'écho en sortie.

La lecture des coefficients de formation de voies de la voie où l'écho est maximum permet de déterminer (906) la direction (droite ou gauche) de la cible.

Le procédé selon l'invention permet fondamentalement de lever l'ambiguïté droite-gauche dans une réception par une antenne linéaire remorquée. Il offre un outre un certain nombre d'avantages dérivés : comme on l'a vu on évalue en permanence la forme précise de l'antenne à partir des données de navigation du corps remorqué, et même de certaines données d'attitude de l'antenne, et cette évaluation ne dépend pas en fait du mouvement du navire tracteur. On compense donc automatiquement les mouvements éventuels de ce navire, que ce soit à cause des remous dus à la mer ou des manoeuvres de ce bateau, par exemple un changement de cap. Cet avantage est particulièrement important car dans le système utilisé jusqu'à présent, où l'on s'efforçait de maintenir l'antenne aussi droite que possible, la réception devenait totalement incohérente lorsque le bateau-tracteur changeait de direction.

Par ailleurs, comme on l'a vu, le lobe principal des voies ainsi formées présente également une directivité en site. Ceci permet d'améliorer considérablement le rapport écho/réverbération, ce qui est particulièrement précieux quand on navigue par petit fond où la réverbération sur le fond représente un niveau de bruit important.

Enfin, comme la forme de l'antenne change en permanence, ainsi qu'on peut le voir sur la figure 1, le niveau de réception sur les lobes secondaires varie périodiquement en fonction des changements de forme, eux-mêmes liés à l'avance de l'antenne. Ainsi donc lorsqu'une cible est déjà détectée, où présumée détectée, on peut optimiser les performances de détection et de mesure de l'antenne en synchronisant l'émission de l'insonificateur, dans le cas d'un sonar actif, de manière à ce que à l'instant prévu de la réception l'antenne ait la forme optimum qui maximise l'atténuation des lobes-images par rapport au lobe principal. On peut ainsi confirmer l'existence de la source de l'écho et opérer une poursuite spécifique pour cette source, permettant de dépasser les limites en portée et en rapport signal/bruit généralement obtenues.

## Revendications

1. Procédé de réception avec levée d'ambiguïté pour une antenne acoustique linéaire remorquée (402) qui comporte un ensemble d'hydrophones destinés à recevoir des signaux acoustiques et à les transformer en signaux électriques, du type où l'on forme des voies de réception en appliquant aux signaux électriques des retards déterminés puis l'on somme les signaux ainsi retardés, en tenant compte de la déformation ainsi apportée à l'antenne, puis l'on fait décrire volontairement à l'antenne une trajectoire ondulatoire (101) autour de sa direction générale de remorquage, caractérisé en ce que la courbure due au trajet ondulatoire est suffisamment forte pour que les voies de réception comprennent un lobe principal (701) et des lobes secondaires (702) dont le niveau est suffisamment faible par rapport au niveau du lobe principal pour permettre de lever l'ambiguïté de réception entre ce lobe principal et les lobes secondaires.

2. Procédé selon la revendication 1, caractérisé en ce que la courbure permet d'obtenir une atténuation de -9 dB du niveau des lobes secondaires (702) par rapport au niveau du lobe principal (701).

3. Procédé selon l'une quelconque des revendications 1 et 2, caractérisé en ce que la courbure due à la trajectoire ondulatoire (101) est suffisamment faible pour que l'ensemble de l'antenne suive sensiblement la trajectoire de la tête de cette antenne.

4. Procédé selon l'une quelconque des revendications 1 à 3, caractérisé en ce que l'on utilise pour remorquer l'antenne (402) un poisson (404) qui est piloté pour permettre d'obtenir ledit mouvement ondulatoire.

5. Procédé selon la revendication 4, caractérisé en ce que l'on utilise pour piloter le poisson des volets (506, 507) hydrodynamiques.

**6.** Procédé selon l'une quelconque des revendications 4 et 5, caractérisé en ce que le mouvement du poisson est commandé par un système (601) en boucle ouverte et que l'on utilise un ensemble de capteurs (602) pour reconstituer (603) la trajectoire du poisson.

**7.** Procédé selon la revendication 6, caractérisé en ce que l'on affine la détermination de la trajectoire de l'antenne en utilisant un modèle hydrodynamique (604) qui permet de déterminer les écarts par rapport à la trajectoire du poisson.

**8.** Procédé selon l'une quelconque des revendications 1 à 3, caractérisé en ce que l'on utilise pour obtenir la trajectoire ondulatoire des moyens (304) pour faire osciller le point d'ancrage sur le bateau-remorqueur (301) du câble (303) servant à tracter l'antenne (302).

**9.** Procédé selon la revendication 8, caractérisé en ce que ces moyens d'oscillation (304) sont constitués par un bras qui oscille dans le plan horizontal par rapport à l'axe longitudinal du bateau-remorqueur (301) et à l'extrémité duquel est fixé le câble de traction (303).

**10.** Procédé selon l'une quelconque des revendications 1 à 9, caractérisé en ce que l'on utilise l'antenne linéaire en mode actif pour recevoir les échos provenant de la réflexion des signaux acoustiques émis par une antenne omnidirectionnelle (502) et que l'on règle les instants d'émission de cette antenne omnidirectionnelle pour maximiser le rapport entre le niveau de réception de cet écho sur d'une part le lobe principal de réception et d'autre part les lobes secondaires sur lesquels celui-ci est également reçu.

**Claims**

**1.** Reception method with ambiguity removal for a towed linear acoustic antenna (402) having an array of hydrophones whose job it is to receive acoustic signals and convert them into electrical signals, of the type whereby reception channels are formed by applying determinate delays to the electrical signals and then the signals thus delayed are totalled, taking account of the deformation thus applied to the antenna, whereupon the antenna is caused to voluntarily describe an undulating trajectory (101) about its general towing direction, characterised in that the curvature due to the undulating trajectory is big enough for the reception channels to comprise a major lobe (701) and minor lobes (702) of a sufficiently low level relative to the level of the major lobe to permit the reception ambiguity between said major lobe and the minor lobes to be removed.

**2.** Method according to claim 1, characterised in that the curvature makes it possible to achieve a -9 dB decrement in the level of the minor lobes (702) with respect to the level of the major lobe (701).

**3.** Method according to either of claims 1 and 2, characterised in that the curvature due to the undulating trajectory (101) is small enough for the antenna assembly to substantially follow the trajectory of the head of said antenna.

**4.** Method according to any of claims 1 to 3, characterised in that for towing the antenna (402) a "fish" (404) is used which is piloted so as to make it possible to obtain said undulating movement.

**5.** Method according to claim 4, characterised in that hydrodynamic flaps (506, 507) are used to pilot the "fish".

**6.** Method according to either of claims 4 and 5, characterised in that the movement of the "fish" is controlled by an open-loop system (601) and that an array of sensors (602) is used in order to restore (603) the trajectory of the "fish".

**7.** Method according to claim 6, characterised in that the determination of the antenna's trajectory is refined using a hydrodynamic model (604) which makes it possible to determine the deviations with respect to the trajectory of the "fish".

**8.** Method according to any of claims 1 to 3, characterised in that to obtain the undulating trajectory means (304) are used in order to cause the point at which the cable (303) used to tow the antenna (302) is anchored on the tugboat (301) to oscillate.

**9.** Method according to claim 8, characterised in that the oscillation means (304) are constituted by an arm which oscillates in the horizontal plane with respect to the longitudinal axis of the tugboat (301), and on the end of which the towing cable (303) is fixed.

**10.** Method according to any of claims 1 to 9, characterised in that the linear antenna is used in active mode to receive the echoes produced by reflection of the acoustic signals emitted by an omnidirectional antenna (502) and that the emission times of said omnidirectional antenna are regulated so as to maximise the ratio between the reception level of said echo over the major reception lobe, on the one hand, and the minor lobes over which said reception level is likewise received, on the other hand.

**Patentansprüche**

1. Empfangsverfahren ohne Mehrdeutigkeit für eine geschleppte lineare akustische Antenne (402), die eine Gruppe Hydrophone umfaßt, die dazu dienen, akustische Signale zu empfangen und diese in elektrische Signale umzuwandeln, und das zu dem Typ gehört, bei dem Empfangskanäle gebildet werden, indem die elektrischen Signale mit bestimmten Verzögerungen versehen werden, dann die verzögerten Signale aufsummiert werden, wobei die an der Antenne auftretende Verformung berücksichtigt wird, und dann die Antenne in gezielter Weise dazu gebracht wird, eine Wellenbahn (101) um ihre allgemeine Schlepprichtung zu beschreiben, dadurch gekennzeichnet, daß die der Wellenbahn aufgezwungene Krümmung so groß ist, daß die Empfangskanäle eine Hauptkeule (701) und Nebenkeulen (702) aufweisen, deren Pegel im Vergleich zum Pegel der Hauptkeule so klein sind, daß die Empfangsmehrdeutigkeit zwischen der Hauptkeule und den Nebenkeulen beseitigt werden kann.

2. Verfahren nach Anspruch 1, dadurch gekennzeichnet, daß es die Krümmung ermöglicht, eine Abschwächung von -9 dB des Pegels der Nebenkeulen (702) im Vergleich zum Pegel der Hauptkeule (701) zu erzielen.

3. Verfahren nach einem der Ansprüche 1 und 2, dadurch gekennzeichnet, daß die der Wellenbahn (101) aufgezwungene Krümmung so schwach ist, daß die gesamte Antenne im wesentlichen der Bahn des Kopfes der Antenne folgt.

4. Verfahren nach einem der Ansprüche 1 bis 3, dadurch gekennzeichnet, daß zum Schleppen der Antenne (402) ein "Fisch" (404) benutzt wird, der geführt wird, um die Wellenbewegung zu erreichen.

5. Verfahren nach Anspruch 4, dadurch gekennzeichnet, daß zum Führen des "Fisches" Hydraulik-Klappen (506, 507) verwendet werden.

6. Verfahren nach einem der Ansprüche 4 und 5, dadurch gekennzeichnet, daß die Bewegung des "Fisches" durch ein System (601) mit einem offenen Regelkreis gesteuert wird und eine Gruppe von Fühlern (602) verwendet wird, um die Bahn (603) des "Fisches" wiederherzustellen.

7. Verfahren nach Anspruch 6, dadurch gekennzeichnet, daß die Bestimmung der Bahn der Antenne dadurch genauer gemacht wird, daß ein hydrodynamisches Modell (604) verwendet wird, daß es ermöglicht, die Abweichungen von der Bahn des "Fisches" zu bestimmen.

8. Verfahren nach einem der Ansprüche 1 bis 3, dadurch gekennzeichnet, daß zur Erzielung der Wellenbahn Mittel (304) verwendet werden, die den an dem Schleppboot (301) befindlichen Befestigungspunkt des zum Ziehen der Antenne (302) dienenden Kabels (303) in Schwingung versetzen.

9. Verfahren nach Anspruch 8, dadurch gekennzeichnet, daß die Schwingungserzeugungsmittel (304) aus einem Arm bestehen, der in der horizontal zur Längsachse des Schleppbootes (301) liegenden Ebene schwingt und an dessen Ende das Zugkabel (303) angebracht ist.

10. Verfahren nach einem der Ansprüche 1 bis 9, dadurch gekennzeichnet, daß eine lineare Antenne im aktiven Modus verwendet wird, um die Echos zu empfangen, die von der Reflexion der von einer Rundstrahlantenne (502) ausgesendeten akustischen Signale stammen, und daß die Momente, an denen die Rundstrahlantenne sendet, geregelt werden, um das Verhältnis zwischen dem Empfangspegel des Echos auf der Hauptempfangskeule und den Empfangspegeln der Echos auf den Nebenkeulen zu maximieren, auf denen dieses gleichermaßen empfangen wird.

FIG.1

FIG.2

FIG.3

304

301

303

302

EP 0 796 439 B1

12

FIG.4

401

403

404

402

FIG.5

Paramètres trajectoire
(Amplitude fréquence)
→ Bloc de commande des gouvernes — 601 → Angles de Gouvernes

Correction des paramètres

Capteurs (Accélérations et Attitude) du poisson — 602

Reconstitution de la trajectoire poisson tridimensionnelle — 603

Filtrage suivant modèle sur une durée équivalente à la longueur antenne

x, y, z, (t)

Capteurs antenne
(Attitude,...)
→ Reconstitution de la forme antenne par modèle — 604

x, y, z, (s)    Géométrie de l'antenne vers traitement d'antenne

# FIG. 6

FIG.7

DONNÉES DE FORME
D'ANTENNE (DE 604 FIG.6)

```
CALCUL DES
COEFFICIENTS DE        701
FORMATION DES VOIES
```

SIGNAUX
HYDROPHONIQUES →
```
FORMATION DES VOIES    702
```

N VOIES

```
TRAITEMENT DE
SIGNAL ADAPTÉ          703
AU CODE EMIS
```

N VOIES

```
DÉTECTION ET
TESTS DE LEVER         704
D'AMBIGUITÉ
```

DÉTECTIONS ÉLÉMENTAIRES
ET MESURES ASSOCIÉES

FIG.8

VERS POST-TRAITEMENTS

INSTANT
D'ARRIVÉE DES
ÉCHOS DÉTECTÉS
MESURES
DES ÉCHOS
905

SIGNAUX HYDROPHONIQUES
MÉMORISÉS
901

CAPTEURS
ACCÉLÉROS ET/OU
D'ATTITUDE
902

RECONSTITUTION
DE L'ATTITUDE
DE L'ANTENNE
903

FORMATION DES PAIRES
DE VOIES DROITE/GAUCHE
OPTIMISATION
SUR L'AMPLITUDE
DE LA DÉFORMÉE
904

DIRECTION (D OU G)
DES ÉCHOS
DÉTECTÉS
(906)

# FIG.9